# EUROPEAN PATENT APPLICATION

(11) **EP 3 501 973 A1**
(43) Date of publication of application: **26.06.2019**
(21) Application number: 18201919.0
(22) Date of filing: 23.10.2018
(51) Int. Cl.: B64C 1/10, B64C 1/00

(54) **PRESSURE BULKHEAD FOR A PRESSURIZED CABIN OF AN AEROSPACE CRAFT, AND AN AEROSPACE CRAFT**

(30) Priority: 20.12.2017 DE 102017130816
(71) Applicant: Airbus Operations GmbH, 21129 Hamburg (DE)
(72) Inventor: Wang, Zhenggui, 21129 Hamburg (DE); Oecal, Muhsin, 21129 Hamburg (DE)
(74) Representative: LKGLOBAL Lorenz & Kopf PartG mbB Patentanwälte

(57) **Abstract**

The invention relates to a pressure bulkhead for a pressurized cabin (30) of an aerospace craft (28), wherein the pressure bulkhead (10) comprises: a pressure wall (14) and a frame (12) for connecting the pressure wall (14) to the aerospace craft (28); wherein the frame (12) is connected to the pressure wall (14); wherein the pressure wall (14) has: a core layer (18); and a first covering layer (16) and a second covering layer (17); wherein the core layer (18) is arranged between the first covering layer (16) and the second covering layer (17); and wherein the core layer (18) comprises an auxetic foam. The invention thus provides an improved pressure bulkhead (10) which has increased stiffness, thus ensuring that smaller bending deformations and lower stresses occur and hence that costs can be saved, and that the volume of the pressurized cabin which can be made available to the crew and passengers is maximized.

## Description

The invention relates to a pressure bulkhead for a pressurized cabin of an aerospace craft, and to an aerospace craft.

Aerospace craft, e.g. passenger aircraft, fly at altitudes at which the air pressure is significantly lower than at ground level. Those areas in which the crew and passengers are accommodated are therefore designed as pressurized cabins. In pressurized cabins, a cabin pressure corresponding approximately to the air pressure at the earth's surface is applied. These pressurized cabins extend along the aircraft and are sealed off at the rear of the aircraft by means of a pressure bulkhead, which can extend over virtually the entire fuselage diameter in the transverse direction relative to the direction of flight. Pressure bulkheads therefore have a large area against which the pressure prevailing in the pressurized cabin acts against the external, lower pressure. They must therefore satisfy special stability and safety requirements.

If pressure bulkheads are to be designed in a material- and weight-saving manner, they typically have a curvature which projects into the pressurized cabin. However, this reduces the space available in the pressurized cabin.

For reasons of stability, more material is required for pressure bulkheads of flat design, and therefore they have a high weight and are of very thick construction.

A flat pressure bulkhead is known from DE 10 2006 029 231 B4, for example. In this case, it has a main bulkhead section and a frame, which carries the main bulkhead section and connects it to the aerospace craft. Here, the main bulkhead section can be designed to have an approximately flat configuration in a no-load state.

As regards weight-saving components, sandwich elements with auxetic, three-dimensional open lattice cores are known from "lightweightdesign - Die Fachzeitschrift für den Leichtbau bewegter Massen", Obrecht et al., 05/2011, page 37-42, said elements providing protection against impinging objects.

It is the object of the invention to provide an improved pressure bulkhead.

The object is achieved by the features of the independent claims. Advantageous developments form the subject matter of the dependent claims and of the following description.

Here, a pressure bulkhead for a pressurized cabin of an aerospace craft is provided, wherein the pressure bulkhead comprises: a pressure wall and a frame for connecting the pressure wall to the aerospace craft; wherein the frame is connected to the pressure wall; wherein the pressure wall has: a core layer; and a first covering layer and a second covering layer; wherein the core layer is arranged between the first covering layer and the second covering layer; and wherein the core layer comprises an auxetic foam.

An auxetic foam is understood to mean a foam which has auxetic properties. Auxetic foam has the property that its Poisson ratio is negative, wherein the Poisson ratio indicates the ratio of a deformation in a direction of load to a deformation transversely to the direction of load. In this context, a negative ratio means that, when the auxetic foam is pulled apart in one direction, it likewise expands in the direction transverse thereto. A non-auxetic material would contract in this direction. Moreover, this means that, when the auxetic material is compressed, the material contracts transversely to the compression. The material becomes more dense than conventional material when it is compressed. This increases the bending stiffness of auxetic material. The bending stiffness of the auxetic core layer is dependent on the Poisson ratio. When the Poisson ratio is close to -1, there is a rapid increase in bending stiffness. There is therefore a much smaller bending deformation in the auxetic core layer due to a pressure difference between the cabin and the environment than in the case of a conventional material. Furthermore, the reduced bending deformation causes a reduction in the tension forces at the edges of the pressure wall. By virtue of this reduced bending deformation and the reduced tension forces, the pressure wall and hence the pressure bulkhead can be designed to be thinner and lighter than in the prior art. As a result, the space required by the pressure bulkhead is reduced, and therefore more space is available for the passengers and/or the crew when it is installed in an aerospace craft. The increased stiffness raises the natural frequency of the pressure wall further, and therefore the pressure bulkhead is less sensitive to vibration and resonance. In this way, a pressure bulkhead is made provided which has increased stiffness, thus ensuring that smaller bending deformations and lower stresses occur and hence that costs can be saved, and that the volume of the pressurized cabin which can be made available to the crew and passengers is maximized.

Furthermore, it is advantageously envisaged that the auxetic foam has a Poisson ratio in a range of from -0.5 to -1, preferably in a range of from -0.85 to -1, more preferably of -1.

In this range, the auxetic foam has the most favourable properties for use in a pressure bulkhead. The stiffness of the auxetic foam with a Poisson ratio in this range leads to low bending deformation with a low outlay on materials for the pressure differences that prevail in the aerospace sector.

It is furthermore advantageous if the core layer has two parallel surfaces facing away from one another; and if one of the two parallel surfaces facing away from one another is arranged on the first covering layer and the other of the two parallel surfaces is arranged on the second covering layer.

It is expedient here if the two parallel surfaces facing away from one another have a spacing in a range of from 50 mm to 200 mm, preferably from 75 mm to 150 mm, more preferably from 90 to 100 mm, most preferably a spacing of 96 mm.

It is advantageous if the first and the second covering layer are flat.

Thus, the pressure bulkhead is of flat design and therefore requires only a small amount of space in the pressurized cabin for installation, maximizing the volume of the pressurized cabin which can be made available to the crew and passengers.

It is furthermore advantageously possible for the first covering layer and the second covering layer to comprise aluminium or carbon-fibre-reinforced plastic (CFRP).

Aluminium can be processed and repaired more cheaply and more easily than steel or other conventional materials. CFRP is even lighter and has even greater strength and stiffness. Moreover, CFRP is more resistant to erosion and fatigue.

It is advantageous if the first covering layer and the second covering layer have a thickness in a direction away from the core layer in a range of from 0.5 mm to 6 mm, preferably from 1 mm to 3 mm, more preferably a thickness of 2 mm.

The pressure bulkhead can furthermore advantageously have a diameter in a range of from 500 mm to 6000 mm, preferably in a range of from 1500 mm to 4500 mm, more preferably from 1750 mm to 2250 mm, most preferably of 2000 mm. In this case, the pressure bulkhead is designed in such a way that it fits into the structure of the aerospace craft.

An aerospace craft is furthermore provided, wherein the aerospace craft comprises: a pressurized cabin having a rear section; and a pressure bulkhead according to the description presented above; wherein the pressure bulkhead is connected in the rear section to the pressurized cabin and forms a rear wall of the pressurized cabin.

The advantages and developments of the aerospace craft will emerge analogously from the description of the pressure bulkhead. In this respect therefore attention is drawn to the description presented above.

The invention is described below with reference to an illustrative embodiment by means of the attached drawing. In the drawing:
- Figure 1: shows a schematic illustration of a pressure bulkhead;
- Figure 2: shows a schematic illustration of a pressure wall under pressure;
- Figures 3a, b: show schematic illustrations of an auxetic lattice structure;
- Figures 4a, b: show schematic illustrations of an intergranular auxetic structure; and
- Figure 5: shows a schematic illustration of an aircraft having a pressure bulkhead at the rear.

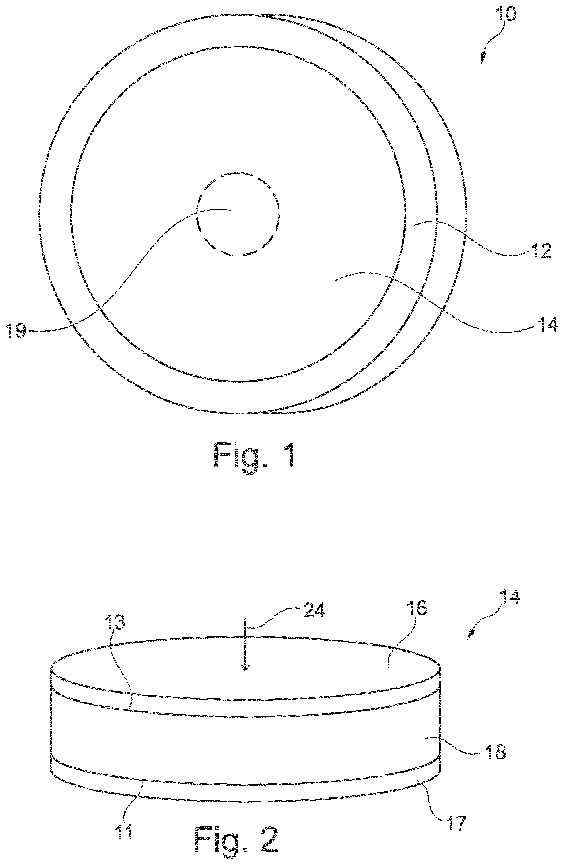

The pressure bulkhead is denoted overall below by the reference sign 10, as illustrated in Figure 1.

The pressure bulkhead 10 has a frame 12 and a pressure wall 14. The pressure wall 14 is inserted into the frame 12. The function of the frame 12 is to connect the pressure wall 14 to an aerospace craft 28. Here, the frame 12 is designed for connection to the aerospace craft 28 over its entire circumference.

The pressure wall 14 is of sheet-like design and fills the frame 12. No pressure equalization can therefore take place between the pressure wall 14 and the frame 12 or through the pressure wall 14 or the frame 12. In this case, the pressure bulkhead 10 has a diameter in a range of from 500 mm to 6000 mm, preferably in a range of from 1500 mm to 4500 mm, more preferably from 1750 mm to 2250 mm, most preferably of 2000 mm.

According to Figure 2, the pressure wall 14 has a core layer 18, which is enclosed on one side by a first covering layer 16 and on the opposite side by a second covering layer 17. The first covering layer and the second covering layer 16, 17 have an extent in a direction away from the core layer 18, i.e. a thickness, in a range of from 0.5 mm to 6 mm, preferably from 1 mm to 3 mm, more preferably a thickness of 2 mm.

Here, the first covering layer 16, the core layer 18 and the second covering layer 17 form a sandwich structure, wherein the first covering layer 16 is connected to a first surface 13 of the core layer 18. The second covering layer 17 is connected to a second surface 11, which is parallel to the first surface 13. In this case, the first surface 13 faces away from the second surface 11. The spacing between the first and the second surface 11, 13 can be in a range of from 50 mm to 200 mm, preferably from 75 mm to 150 mm, more preferably from 90 to 100 mm, most preferably a spacing of 96 mm.

The core layer 18 furthermore has an auxetic foam, wherein the auxetic foam has a Poisson ratio in a range of from -0.5 to -1, preferably in a range of from -0.85 to -1, more preferably of -1. In this range, the auxetic foam has the most favourable properties for use in a pressure bulkhead.

As illustrated in Figure 2, the bending stiffness of the core layer 18 is furthermore increased when it is compressed in direction 24.

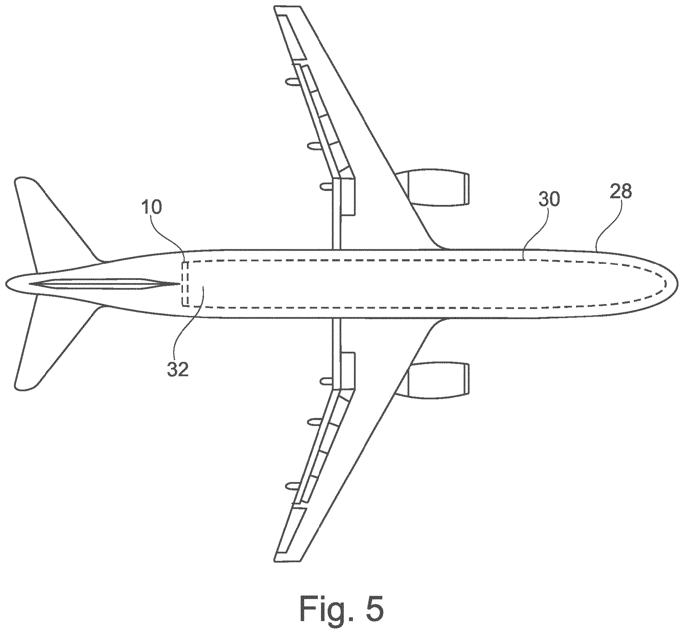

During a flight through the troposphere, for example, the pressure bulkhead 10, which is used to seal a pressurized cabin 32, as illustrated in Figure 5, is therefore subjected to a pressure difference between the pressure in the pressurized cabin 32 and the pressure of the troposphere. The cabin pressure in the pressurized cabin 32 will therefore exert a force on the pressure wall 14. As a result, the core layer 18 is compressed, wherein the bending stiffness of the core layer 18 increases.

The increase in the bending stiffness has the effect that bending deformation of the pressure wall 14 due to the pressure difference is less than with conventional pressure bulkheads. By virtue of the reduced bending deformation, lower deformation forces occur at the edges of the pressure wall 14 or at the joint between the pressure wall 14 and the frame 12 and the joint with the aerospace craft 28. At a Poisson ratio of -1, the bending stiffness is increased to such an extent that no bending deformation occurs.

The pressure bulkhead 10 can therefore be of flat and thin design, thus maximizing the space in the pressurized cabin 32.

Furthermore, in one illustrative embodiment, at a pressure difference of 1 bar between the two sides of the pressure bulkhead 10, at a diameter of the pressure bulkhead 10 of 2000 mm and at a Poisson ratio of the auxetic foam of -0.85, a thickness of the core layer 18 of 96 mm and a thickness of a first covering layer 16 and of a second covering layer 17 made from aluminium of 2 mm can be chosen. The total thickness of the pressure wall of the pressure bulkhead is therefore just 100 mm.

Furthermore, the bending deformation of the centre 19 of the pressure wall 14 can thereby be reduced by about 50% in comparison with conventional flat pressure bulkheads. Furthermore, the deformation forces at the edges of the pressure wall 14 can be reduced by 50% in comparison with conventional flat pressure bulkheads. By virtue of the increased stiffness, the natural frequency of the pressure bulkhead 10 is also increased by about 40%. Owing to the lower forces and increased natural frequency, the pressure bulkhead 10 is more stable than conventional pressure bulkheads and is subject to less vibration, as a result of which fatigue phenomena of the material are reduced and also less material is required overall. Furthermore, service intervals can thereby be lengthened, and weight is saved.

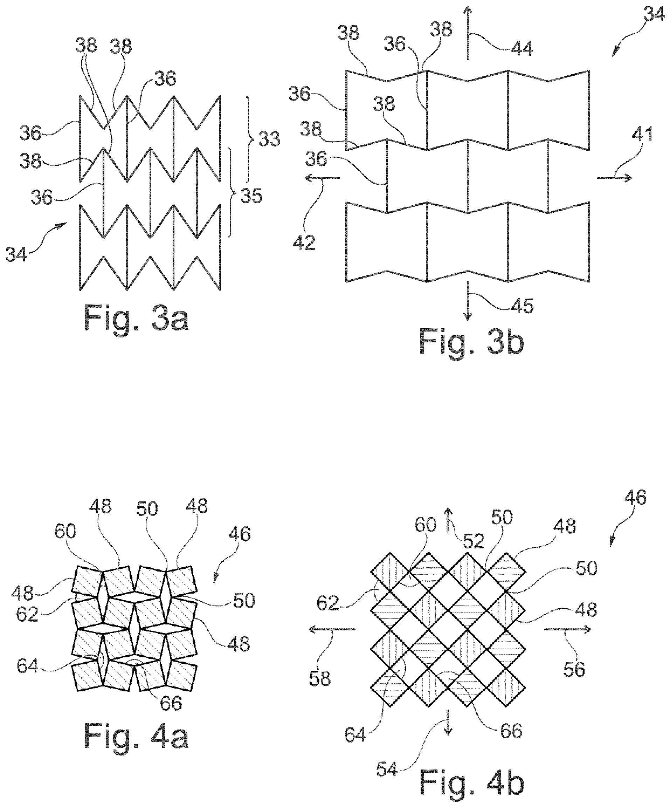

The property of auxetic materials is described in greater detail below with reference to Figures 3a and 3b. Here, Figures 3a and 3b show an auxetic open lattice structure 34.

The auxetic open lattice structure 34 has first members 36, which are connected to one another by second members 38. In this case, the second members 38 are connected in articulated fashion to the first members 36. The first members 36 and the second members 38 have a constant length. Furthermore, the second members 38 can be pivoted at the joint with the first members 36. That is to say that the angle between the second members 38 and the first members 36 can be changed.

The first members 36 form a plurality of rows 33, 35. In this arrangement, the first members 36, which form a row 33, are each connected to one another by two second members 38. The first members 36 which are arranged in different adjacent rows 33 and 35 are each connected to one another by a single second member 38. According to Figure 3a, the rows 33, 35 of the first members 36 overlap in this arrangement, with the result that the second members 38 enclose a small angle with the first members 36 connected to them.

According to Figure 3b, the auxetic open lattice structure 34 is pulled apart in directions 44 and 45. As a result, the auxetic open lattice structure 34 unfolds, wherein the angle between the second members 38 and the first members 36 increases. This has the effect that the auxetic open lattice structure 34 expands in directions 41 and 42.

Conversely, this means that the auxetic open lattice structure 34 acts in the direction opposite to directions 44 and 45, with the result that the angles between the first members 36 and the second members 38 are reduced. As a result, the overlap between the rows 33, 35 of the first members 36 is increased. This has the effect that the auxetic open lattice structure 34 contracts in the directions opposite to directions 41 and 42.

The two effects described above are likewise achieved if the forces are applied with an offset of 90°, i.e. in directions 41, 42. It is furthermore sufficient if one component of a force acts in these directions.

A two-dimensional auxetic open lattice structure is described in each of Figures 3a and 3b. The effect described above is similar for three-dimensional auxetic open lattice structures.

An intergranular auxetic structure 46 is illustrated in Figures 4a and 4b.

The intergranular auxetic structure 46 comprises granules 48 which are connected to one another at the corners or edges 50 thereof. At the same time, the connection between the granules 48 is of articulated design, i.e. the granules 48 can be pivoted relative to one another about the corners or edges 50. Furthermore, the granules 48 in this example are designed to have a rigid shape, and therefore their shape is not changed by a force on the intergranular auxetic structure 46.

In Figures 4a and 4b, the granules 48 are illustrated two-dimensionally as squares. In this case, the granules 48 are connected to one another in an articulated fashion via the corners 50. However, this does not exclude the possibility of making the granules 48 three-dimensional and connecting them to one another via additional corners or edges 50. Furthermore, the granules 48 merely stand symbolically for any granular structure of a foam, and therefore the individual elements of the foam are not restricted to square structures.

In Figure 4a, the granules 48 are pivoted by only a small angle relative to the horizontal or to the vertical. In this case, the angles 60 and 62 between the granules 48 are smaller than 90°. Furthermore, the angles 64 and 66 are greater than 90°. The spaces between the granules 48 are therefore of diamond-shaped configuration.

In Figure 4b, forces are exerted on the intergranular structure 46 in directions 52 and 54. By virtue of the connection at the corners or edges 50 of the granules 48, these forces bring about a further rotation of the granules 48. This increases the angles 60 and 62 between the granules 48 to an angle of 90°. Furthermore, the angles 64 and 66 decrease to 90°. The spaces between the granules 48 are now of square configuration.

Owing to the rotation of the granules 48, the intergranular auxetic structure 46 is pushed apart in directions 56 and 58. If, therefore, the granules 48 are moved away from one another in a direction 52 and/or 54, this has the effect of moving the granules 48 apart in direction 56 and/or 58 transversely thereto.

The same effect is therefore achieved if the forces act on the granules 48 in directions 56 and 58. In this case, forces act in such a way that the granules 48 also move away from one another in directions 52 and 54.

Starting from Figure 4a, forces which act in the directions opposite to directions 52 and 54 bring about a reduction in the angles 60 and 62 and an increase in the angles 66 and 64. As a result, the spaces between the granules 48 are elongated, and the granules 48 are thereby pushed closer together. This likewise brings about a reduction in the extent of the intergranular auxetic structure 46 in directions 56 and 58.

In Figure 5, an aircraft 28 is illustrated as an example of an aerospace craft. In this case, there is no intention to exclude the possibility that the aerospace craft can also be a spaceship, e.g. a space shuttle or a space capsule.

The aircraft 28 has a pressurized cabin 30. The pressurized cabin 30 serves to accommodate passengers and crew. Furthermore, the pressurized cabin 30 serves to maintain a cabin pressure corresponding to atmospheric pressure at the surface of the earth in an environment which has a lower atmospheric pressure. This can be in the troposphere or even in interstellar space, for example.

The pressurized cabin 30 furthermore has a rear section 32, which is arranged at the rear of the aircraft 28. The pressurized cabin 30 is sealed off at this point by the pressure bulkhead 10. That is to say that the pressure bulkhead 10 maintains the cabin pressure prevailing in the pressurized cabin 30 relative to the environment. The pressure bulkhead 10 is therefore connected airtightly to the pressurized cabin 30 and likewise seals off the pressurized cabin 30 airtightly relative to the environment.

In this arrangement, the pressure bulkhead 10 forms a rear wall of the pressurized cabin 30. Here, the first and the second covering layer 16, 17 of the pressure bulkhead 10 are of virtually flat construction when not subject to any external forces. Therefore, the pressure bulkhead 10 takes up only a small amount of space in the pressurized cabin 30, thus enabling a maximum amount of space to be made available to the passengers and the crew in the pressurized cabin 30. This space can be used to provide additional passenger seats or additional stowage space for freight or other objects.

When the cabin pressure in the pressurized cabin 30 is higher than in the environment of the aircraft 28, the pressure wall 14 of the pressure bulkhead 10 arches in the direction of the rear of the aircraft 28. In this case, the centre 19 of the pressure wall 14 of the pressure bulkhead 10 is deflected to the greatest extent from the overall structure of the pressure bulkhead 10. In this case, the forces which arise at the edges of the pressure bulkhead 10 also act on the frame structure of the aircraft 28.

The core layer 18, which comprises an auxetic foam, keeps the bending deformation of the centre 19 of the pressure wall 14 small, and it is therefore likewise possible to keep the forces at the edges of the pressure bulkhead 10 and hence also on the frame structure of the aircraft 28 small. As a result, the overall structure of the aircraft 28 is subjected to weaker forces, and therefore fatigue of the materials of the frame structure of the aircraft 28 and of the pressure bulkhead 10 occurs later than when using a conventional pressure bulkhead 10.

In another embodiment (not shown), the first covering layer 16 and the second covering layer 17 together form a lens shape when they enclose the core layer 18. In this embodiment, the first and the second surface 11, 13 of the core layer 18 can be of convex design. In this form, the pressure wall 10 has a thickened shape in the centre 19, and therefore the pressure wall 10 is of more stable design at this point by virtue of the increased thickness than at the edge thereof.

## Claims

1. Pressure bulkhead for a pressurized cabin (30) of an aerospace craft (28), wherein the pressure bulkhead (10) comprises:
- a pressure wall (14); and
- a frame (12) for connecting the pressure wall (14) to the aerospace craft (28);
wherein the frame (12) is connected to the pressure wall (14);
wherein the pressure wall (14) has:
- a core layer (18); and
- a first covering layer (16) and a second covering layer (17);
wherein the core layer (18) is arranged between the first covering layer (16) and the second covering layer (17); and
wherein the core layer (18) comprises an auxetic foam.

2. Pressure bulkhead according to Claim 1, wherein the auxetic foam has a Poisson ratio in a range of from -0.5 to -1, preferably in a range of from -0.85 to -1, more preferably of -1.

3. Pressure bulkhead according to Claim 1 or 2, wherein the core layer (18) has two parallel surfaces (11, 13) facing away from one another; and
wherein one of the two parallel surfaces (11, 13) facing away from one another is arranged on the first covering layer (16) and the other of the two parallel surfaces (11, 13) is arranged on the second covering layer (17).

4. Pressure bulkhead according to Claim 3, wherein the two parallel surfaces (11, 13) facing away from one another have a spacing in a range of from 50 mm to 200 mm, preferably from 75 mm to 150 mm, more preferably from 90 to 100 mm, most preferably a spacing of 96 mm.

5. Pressure bulkhead according to one of Claims 1 to 4, wherein the first covering layer (16) and the second covering layer (17) are flat.

6. Pressure bulkhead according to one of Claims 1 to 5, wherein the first covering layer (16) and the second covering layer (17) comprise aluminium or carbon-fibre-reinforced plastic.

7. Pressure bulkhead according to one of Claims 1 to 6, wherein the first covering layer (16) and the second covering layer (17) have a thickness in a direction away from the core layer (18) in a range of from 0.5 mm to 6 mm, preferably from 1 mm to 3 mm, more preferably a thickness of 2 mm.

8. Pressure bulkhead according to one of Claims 1 to 7, wherein the pressure bulkhead (10) has a diameter in a range of from 500 mm to 6000 mm, preferably in a range of from 1500 mm to 4500 mm, more preferably from 1750 mm to 2250 mm, most preferably of 2000 mm.

9. Aerospace craft (28) comprising
- a pressurized cabin (30) having a rear section (32); and
- a pressure bulkhead (10) according to one of Claims 1 to 8;
wherein the pressure bulkhead (10) is connected in the rear section (32) to the pressurized cabin (30) and forms a rear wall of the pressurized cabin (30).
